# EUROPEAN PATENT SPECIFICATION

(11) **EP 1 057 948 B1**
(45) Date of publication and mention of the grant of the patent: **26.07.2006**
(21) Application number: 00118727.7
(22) Date of filing: 02.05.1995
(51) Int. Cl.: E04G 23/02, B25F 3/00, B25D 17/00, F16B 15/06

(54) **Dry fixing system**
Trockenankerungssystem
Système de fixation à sec

(43) Date of publication of application: 06.12.2000
(62) Divisional of application: 95302978.2
(73) Proprietor: HELIFIX LIMITED, London W3 0RX (GB)
(72) Inventor: Paterson, Robert Ian, London W6 OUN (GB); Breeze, Brian Alan, Wallsend, Tyne & Wear, NE28 9DZ (GB)
(74) Representative: Hall, Matthew Benjamin

(56) References cited:
- EP-A- 0 426 918
- EP-A- 0 494 723
- BE-A- 840 070
- DE-A- 4 140 492
- GB-A- 2 213 420
- GB-A- 2 262 560
- GB-A- 2 280 927
- US-A- 2 657 383
- US-A- 4 218 795

## Description

The present invention relates to a dry fixing system for inserting wall ties.

It is frequently desirable to form a connection between building units, such as bricks or blocks or timber. Typical instances include tying together the inner and outer leaves of a cavity wall, fixing bricks back to lighter weight blocks, and providing extra strengthening at the junction of two walls. Wall ties are commonly used for these purposes. Suitable types of tie include one-piece stainless steel rods formed with helical fins around a solid core and sold by Helifix Ltd under the Trade Mark DRYFIX.

One method currently used with considerable success for installing these helical ties is to drill a pilot hole in the required position, insert the tie and then grout the tie in position using a chemically bonding grout. Although the results are eminently satisfactory, the installation operation is time consuming and requires skill. Furthermore, the nature of the grout material renders the installation operation sensitive to climatic conditions, in particular, very high and very low temperatures.

It is therefore an object of the invention to provide a system for inserting a wall tie which does not rely upon a chemical grout.

EP-A-0171250 discloses a number of methods of installing wall ties consisting of stainless steel rods formed with helical fins around a solid core. Grout is used in the masonry applications to secure the rear end of the wall tie in the brickwork of the outer leaf of the wall.

According to the present invention, there is provided a method of interconnecting two or more building units of brick and/or concrete with a wall tie and without the use of grout wherein a first building unit is of softer material than a second building unit, the wall tie consisting of a rod comprising a solid core with two or more helical fins and preferably formed into a point at at least one end, the method comprising:
forming a first pilot hole through the first building unit, forming a second pilot hole of the same diameter and coaxial with the first pilot hole in the second building unit, the pilot holes being formed so that their diameter is less than the overall diameter of the tie which is to engage the building units; introducing the tie into the pilot hole in the first building unit;
and inserting the tie by driving it sequentially into the two pilot holes by means of an insertion tool which is driven by a percussion tool; the insertion tool comprising a housing having means in the form of a bore to receive the tie, wherein to drive the wall tie into the pilot holes, the percussion tool is energised and repeated axial impacts are generated, the repeated axial impacts driving the wall tie deeper into the pilot holes as the helical fins of the wall tie cut progressively into the material of the building units, the method being characterised in that the tool being used to drive the wall tie into the building units further includes means in the form of a spring biased dolly which is arranged for axial reciprocating movement within the housing to transmit repeated axial impacts from the percussion tool to the tie, while allowing the tie to rotate as the helical fins cut into the material of the building units, each impact displacing the dolly axially with respect to the housing against its spring bias, which in turn displaces a trailing end of the wall tie axially with respect to the housing as the axial impact is transmitted to the wall tie, the method being further characterised in that a two-step wall tie is used having a forward portion which is formed with a smaller overall diameter than the remainder of the wall tie, the reduced diameter forward portion of the wall tie being driven into the harder material of the second building unit whilst the larger diameter rearward portion of the wall tie grips in the softer material of the first building unit.

Thus, two building units can be tied together in a "dry" manner, that is to say, without the need for any grout. In many cases, therefore, it will merely be necessary for an installer to drill pilot holes and then, using a percussion tool such as a hammer drill or a pneumatic hammer, together with a suitable insertion tool, simply drive the ties home. It has been found that a tenacious bond can be achieved even without grouting since the helical fins cut into the material of the building units and the ties are therefore extremely resistant to removal.

Naturally, more than two building units can be interconnected sequentially in this way.

The system is equally applicable to cavity situations, where the building units are spaced apart, or adjacent situations, where the units are in contact.

By way of illustration, where constant diameter wall ties are inserted into building units (no longer within the scope of this invention), conveniently, the tie has a diameter of 6mm and the pilot holes have diameters in the range of 4mm to 5mm; or the tie has a diameter of 8mm and the pilot holes have diameters in the range of from 5mm to 6.5mm; or the tie has a diameter of 10mm and the pilot holes have diameters in the range of 6mm to 8mm. The tie is preferably made from stainless steel and the helix may be right or left-handed.

The present system is applicable in cases where the two building units are of differing hardness, namely when the first building unit is of softer material than the second. This technique may occur for example where there is a requirement to fix through the mortar joint in an outer leaf and fix into reinforced concrete or brick.

In such a case, a two diameter tie is used, with a forward portion having a reduced diameter. It is then possible to use a single drill passing through the mortar and into the concrete or brick. The smaller diameter end of the tie is then driven into the hard material and the larger diameter portion will still grip effectively in the softer, outer leaf mortar. This two-step tie proves useful, not only in mortar bed to concrete applications, but in any application where it is desired to fix a soft/weak material to a hard/strong material. The division between the smaller diameter portion and the larger diameter portion forms a step in the two-step tie. The smaller diameter portion is preferably, but not necessarily, shorter, and may represent about one third the length of the two-step tie.

The present invention therefore also extends to such a two-step tie. Apart from the differing diameter, the features of the tie would be similar to those of the constant diameter tie.

The blows may be applied most conveniently by a percussion tool such as a hammer drill or a pneumatic hammer.

Preferably, the bore at the front of the housing is constituted by a removable sleeve. This enables ties of different diameters to be received. The sleeve may be held in position by means of a grub screw.

Preferably, the tapered end of the dolly is a mating fit in a suitably tapered cavity in the anvil. The anvil may have a transverse opening corresponding to the position of the tip of the tapered part of the dolly which would allow a dolly/anvil sub-assembly to be dismantled by applying a blow to end of the tapered part.

Preferably, smooth reciprocal movement of the dolly is achieved by means of a bearing member mounted on the dolly and engaging the inside surface of the housing cavity. Preferably, the anvil includes a formation arranged to engage the operative part of a percussion tool such as a hammer drill. Usually, the formation would take the form of grooves which would engage splines in the hammer drill.

Preferably, the dolly/anvil assembly is biased rearwards. This may be achieved by means of a spring acting between a shoulder within the housing and a flange on the dolly. The spring may engage the flange on the dolly via a suitable ring or collet. In cases where the percussive blows are to be supplied in combination with a rotary motion, it may be preferable for the spring to be "left-handed" in order to minimise frictional contact between the ends of the spring wire and the spring seatings, and to avoid the tendency of the spring wire ends to dig into the seatings.

The housing may be made of metal. Preferably, however, it is made from a suitable rigid plastics material such as nylon; this provides impact resistance, lightness and is thermally neutral.

Preferably the tool is provided with a sheath enveloping the rear part of the housing and having an aperture through which the dolly/anvil sub-assembly passes, the sheath constituting a hand grip. The sheath may be made from a flexible plastics material.

The invention may be carried into practice in various ways and some embodiments will now be described by way of example with reference to the accompanying drawings, in which:-
Figure 1 is an axial section through an insertion tool which can be used in accordance with the method of the invention;
Figure 2 is a view of a constant diameter wall tie which can be used with the insertion tool; and
Figure 3, 4 and 5 are sequential schematic views of a method of inserting a constant diameter wall tie. Although constant diameter wall ties are no longer within the scope of this invention, the figures provide an illustration of the method used for inserting a two-step wall tie in accordance with the invention.

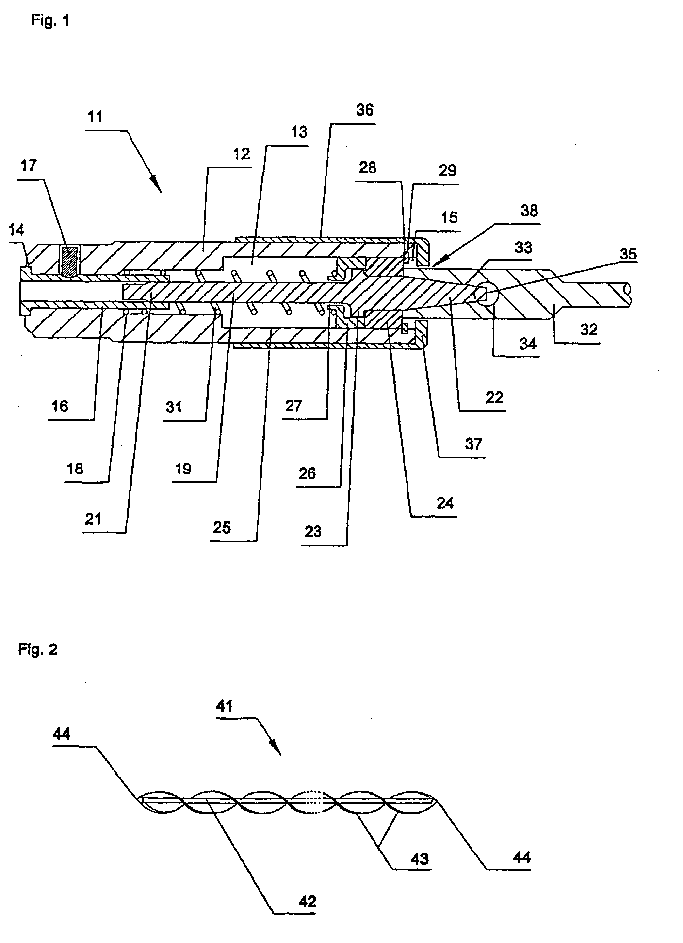

As shown in Figure 1, the tool 11 comprises a generally cylindrical body 12 having a cavity 13, a front opening 14 and a rear opening 15. A flanged sleeve 16 is located in the front opening 15 and extends rearwards. It is held in position by means of a grub screw 17. Intermediate the ends of the sleeve, the body 12 has an internal shoulder 18 falling rearwards.

Located within the cavity 13 and extending into the sleeve is a dolly 19. The front end 21 of the dolly 19 is a flat or optionally formed with a shallow indentation The rear end 22 of the dolly 19 is formed with a very shallow taper (which is exaggerated in Figure 1 for reasons of clarity). Between the two ends 21, 22, the dolly has a circumferential flange 23.

A bearing ring 24 is located on the dolly, to the rear of the flange 23. The bearing ring 24 forms a smooth sliding fit with the inside wall 25 of the cavity 13. A stepped collet 26 is located forward of the bearing ring 24. The collet 26 houses the flange 23 and provides a forwardly expending ring 27.

A circlip 28 is located in an internal groove 29 at the rear of the body 12, behind the bearing ring 24. Those engagements between the flange 23, the bearing ring 24 and the circlip 28 ensure that the dolly 19, the collet 26 and the bearing ring 24 are retained within the cavity 13. A spring 31 surrounds the forward part of the dolly 19, acting between the shoulder 18 and the collet 26. In this way, the dolly is biassed rearwards, and the bearing ring 24 is urged into contact with the circlip 28.

The tool 11 also includes an anvil 32. The anvil 32 has a cavity 33 which is tapered to match the tapered end 22 of the dolly 19, and a lateral hole 34. The tapered end 22 of the dolly 19 is a mating fit in the cavity 33 and the rear tip 35 of the dolly 19 coincides with the hole 34. A plastics sheath 36 is located over the rear part of the body 12. The sheath 36 has an end wall 37 which serves to cover the circlip 28. The sheath 36 has an opening 38 through which the anvil 32 passes.

Figure 2 shows a constant diameter wall tie 41. The tie 41 would generally be longer than as shown. The tie 41 comprises a solid core 42 and two helical flanges 43. Both ends are sharpened into points 44, though one pointed end may be preferred.

In use, the tie 41 is inserted into the sleeve 16 of the tool 11 until it contacts the front end 21 of the dolly 19. The anvil 32 is then struck repeatedly. Each blow to the anvil 32 causes the dolly 19 to move axially forwards against the spring 31, the movement being guided by the sleeve 16 at the front and the bearing ring 24 at the rear. Between blows, the spring 31 returns the dolly 19 to the initial position shown in Figure 1.

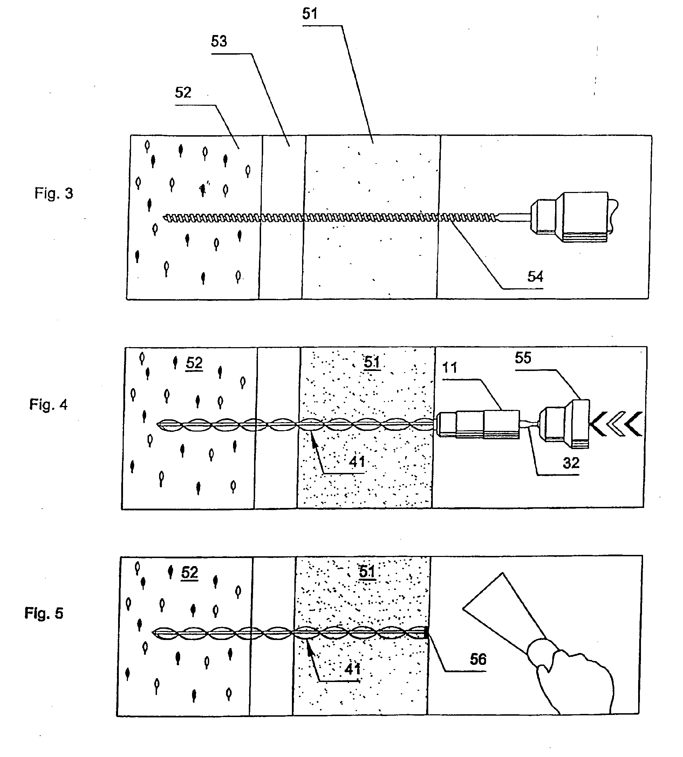

Figures 3 to 5 show the sequence of operations for inserting a tie 41. In this case a brick 51 in an outer leaf is to be tied back to an inner leaf of blocks 52, separated by a cavity 53.

Firstly, a pilot hole is drilled though the brick 51 and into the block 52 using a 6mm drill bit 54 as shown in Figure 1. Then a tie 41 with an overall diameter of 8mm is inserted into the tool 11 as described above. The tool 11 is connected to a hammer drill 55 which is energised, thereby applying repeated blows to the anvil 32. This is continued until the tie 41 is driven to the required depth, as shown in Figure 2. In this case the trailing end of the tie 41 is recessed below the surface of the brick 51. The recess 56 is made good with an appropriate filler.

## Claims

1. A method of interconnecting two or more building units (51,52) of brick and/or concrete with a wall tie (41) and without the use of grout wherein a first building unit (51) is of softer material than a second building unit (52), the wall tie (41) consisting of a rod comprising a solid core (42) with two or more helical fins (43) and preferably formed into a point (44) at at least one end, the method comprising: forming a first pilot hole through the first building unit (51), forming a second pilot hole of the same diameter and coaxial with the first pilot hole in the second building unit (52), the pilot holes being formed so that their diameter is less than the overall diameter of the tie (41) which is to engage the building units (51,52); introducing the tie (41) into the pilot hole in the first building unit (51); and inserting the tie (41) by driving it sequentially into the two pilot holes by means of an insertion tool (11) which is driven by a percussion tool; the insertion tool (11) comprising a housing (12) having means in the form of a bore (16) to receive the tie, wherein to drive the wall tie (41) into the pilot holes, the percussion tool is energised and repeated axial impacts are generated, the repeated axial impacts driving the wall tie deeper into the pilot holes as the helical fins (43) of the wall tie (41) cut progressively into the material of the building units (51,52), the method being **characterised in that** the tool being used to drive the wall tie into the building units further includes means in the form of a spring biased dolly (19) which is arranged for axial reciprocating movement within the housing (19,32) to transmit repeated axial impacts from the percussion tool to the tie (41), while allowing the tie (41) to rotate as the helical fins (43) cut into the material of the building units (51,52), each impact displacing the dolly (19) axially with respect to the housing against its spring bias, which in turn displaces a trailing end of the wall tie axially with respect to the housing as the axial impact is transmitted to the wall tie, the method being further **characterised in that** a two-step wall tie is used having a forward portion which is formed with a smaller overall diameter than the remainder of the wall tie, the reduced diameter forward portion of the wall tie being driven into the harder material of the second building unit (52) whilst the larger diameter rearward portion of the wall tie grips in the softer material of the first building unit (51).

2. A method as claimed in claim 1, wherein the wall tie (41) is driven by the spring biased dolly (19) to a position where the trailing end of the wall tie is recessed below the surface of the first building unit (51).

3. A method as claimed in claim 1 or 2, wherein the wall tie is formed with a point at its trailing end (44) which is received in an indentation in the spring biased dolly (19) during the transmission of the repeated axial impacts.

4. A method as claimed in claim 1, 2 or 3, wherein the spring bias of the dolly (19) returns the dolly to its initial axial position between impacts.

5. A method as claimed in any preceding claim, in which the percussion tool is a rotary percussion tool and upon energisation rotates the dolly (19) with respect to the housing, wherein an insertion tool is used in which the dolly (19) is biased by a left-handed coil of spring wire located between spring seatings so that rotation of the dolly (19) results in minimal frictional contact between the ends of the spring wire and the spring seatings.

6. A method as claimed in any preceding claim, wherein the second building unit (52) is of reinforced concrete or brick and the two-step wall tie is being installed through a mortar joint in the first building unit to fix the first building unit to the second building unit.

7. A two-step wall tie for use in the method of any of claims 1 to 6 comprising a central solid core with two or more helical fins and formed into a point at each end, wherein one end portion of the wall tie which is for being driven into the harder material of the second building unit (52) has a smaller overall diameter than the remainder of the wall tie which is for gripping in the softer material of the first building unit (51), wherein the division between the smaller diameter portion and the larger diameter portion forms a step in the two-step tie.

8. A two-step wall tie as claimed in claim 7, wherein the smaller overall diameter portion represents less than half the total length of the wall tie.

9. A two-step wall tie as claimed in claim 8, wherein the smaller diameter portion represents about one third the length of the two-step tie.

## Patentansprüche

1. Verfahren zum Verbinden von zwei oder mehr Gebäudeeinheiten (51, 52) aus Ziegelsteinen und/oder aus Beton mit einem Wandanker (41) und ohne die Verwendung von Mörtel, wobei eine erste Gebäudeeinheit (51) aus einem weicheren Material als eine zweite Gebäudeeinheit (52) besteht, der Wandanker (41) aus einer Strebe mit einem festen Kern (42) mit zwei oder mehr schraubenförmigen Rippen (43) besteht und vorzugsweise an zumindest einem Ende zu einer Spitze (44) ausgebildet ist, wobei das Verfahren die folgenden Schritte aufweist:
Bilden einer ersten Vorbohrung durch die erste Gebäudeeinheit (51),
Bilden einer zweiten Vorbohrung in der zweiten Gebäudeeinheit (52) mit demselben Durchmesser wie und koaxial zu der ersten Vorbohrung, wobei die Vorbohrungen so ausgebildet sind, dass ihr jeweiliger Durchmesser kleiner als der Gesamtdurchmesser des Wandankers (41) ist, der in die Gebäudeeinheiten (51, 52) eingreifen soll,
Einführen des Wandankers (41) in die Vorbohrung in der ersten Gebäudeeinheit (51), und
Einführen des Wandankers (41), indem er nacheinander in die beiden Vorbohrungen mittels eines Einführungswerkzeugs (11) getrieben wird, das durch ein Schlagwerkzeug angetrieben ist, wobei das Einführungswerkzeug (11) ein Gehäuse (12) umfasst, das Mittel in der Form eines Bohrlochs (16) aufweist, um den Wandanker (41) aufzunehmen, wobei das Schlagwerkzeug erregt wird bzw. Energie auf das Schlagwerkzeug übertragen wird und wiederholte axiale Stöße erzeugt werden, um den Wandanker in die Vorbohrungen zu treiben, wobei die wiederholten axialen Stöße den Wandanker tiefer in die Vorbohrungen treiben, da die spiralförmigen Rippen (43) des Wandankers (41) sich zunehmend in das Material der Gebäudeeinheiten (51, 52) schneiden,
wobei das Verfahren **dadurch gekennzeichnet ist, dass** das Werkzeug, das dazu verwendet wird, den Wandanker in die Gebäudeeinheiten zu treiben, des weiteren Mittel in der Form eines federvorgespannten Rammaufsatzes (19) umfasst, der zu einer axialen Kolbenbewegung innerhalb des Gehäuses (19, 32) angeordnet ist, um wiederholte axiale Stöße von dem Schlagwerkzeug auf den Wandanker (41) zu übertragen, während dem Wandanker (41) ermöglicht ist zu rotieren, da sich die spiralförmigen Rippen (43) in das Material der Gebäudeeinheiten (51, 52) schneiden, wobei jeder Schlag den Rammaufsatz (19) axial in bezug auf das Gehäuse entgegen seiner Federvorspannung versetzt, die wiederum ein zurückhängendes Ende des Wandankers axial in bezug auf das Gehäuse versetzt, wenn der axiale Schlag auf den Wandanker übertragen wird,
wobei das Verfahren des weiteren **dadurch gekennzeichnet ist, dass** ein Zwei-Stufen-Wandanker verwendet wird, der einen vorderen Abschnitt aufweist, der mit einem kleineren Gesamtdurchmesser als der Rest des Wandankers ausgebildet ist, wobei der verringerte Durchmesser des vorderen Abschnitts des Wandankers in das härtere Material der zweiten Gebäudeeinheit (52) getrieben wird, während der größere Durchmesser des hinteren Abschnitts des Wandankers in das weichere Material der ersten Gebäudeeinheit (51) fasst.

2. Verfahren nach Anspruch 1, bei dem der Wandanker (41) durch den federvorgespannten Rammaufsatz (19) in eine Position getrieben wird, in der das zurückhängende Ende des Wandankers unter der Oberfläche der ersten Gebäudeeinheit (51) zurückgesetzt ist.

3. Verfahren nach Anspruch 1 oder 2, bei dem der Wandanker an seinem zurückhängenden Ende (44) mit einer Spitze ausgebildet ist, die in einer Einbuchtung in den federvorgespannten Rammaufsatz (19) während der Übertragung der wiederholten axialen Stöße aufgenommen ist.

4. Verfahren nach einem der Ansprüche 1, 2 oder 3, bei dem die Federvorspannung des Rammaufsatzes (19) den Rammaufsatz zwischen den Stößen in seine ursprüngliche axiale Position zurückholt.

5. Verfahren nach einem der voranstehenden Ansprüche, bei dem das Schlagwerkzeug ein rotierendes Schlagwerkzeug ist und aufgrund der Erregung bzw. der Energieübertragung den Rammaufsatz (19) in bezug auf das Gehäuse rotiert, wobei ein Einführungswerkzeug verwendet wird, in dem der Rammaufsatz (19) durch eine linksgewundene Schraubenfeder aus Federdraht vorgespannt ist, die zwischen Federaufnahmen angeordnet ist, so dass die Rotation des Rammaufsatzes (19) in einem minimalen Reibkontakt zwischen den Enden des Federdrahts und den Federaufnahmen resultiert.

6. Verfahren nach einem der voranstehenden Ansprüche, bei dem die zweite Gebäudeeinheit (52) aus verstärktem Beton oder aus Ziegelsteinen besteht und der Zwei-Stufen-Wandanker durch eine Mörtelverbindung in der ersten Gebäudeeinheit installiert ist, um die erste Gebäudeeinheit an der zweiten Gebäudeeinheit zu fixieren.

7. Zwei-Stufen-Wandanker zur Verwendung in einem Verfahren nach einem der Ansprüche 1 bis 6, mit einem zentralen festen Kern mit zwei oder mehr spiralförmigen Rippen und der an jedem Ende zu einer Spitze ausgebildet ist, wobei ein Endabschnitt des Wandankers, der dazu vorgesehen ist, in das härtere Material der zweiten Gebäudeeinheit (52) getrieben zu werden, einen kleineren Gesamtdurchmesser als der Rest des Wandankers aufweist, der dazu vorgesehen ist, in das weichere Material der ersten Gebäudeeinheit (51) zu greifen, wobei die Trennung zwischen dem Abschnitt mit dem kleineren Durchmesser und dem Abschnitt mit dem größeren Durchmesser eine Stufe in dem Zwei-Stufen-Wandanker ausbildet.

8. Zwei-Stufen-Wandanker nach Anspruch 7, bei dem der Abschnitt mit dem kleineren Gesamtdurchmesser weniger als die Hälfte der Gesamtlänge des Wandankers ausmacht.

9. Zwei-Stufen-Wandanker nach Anspruch 8, bei dem der Abschnitt mit dem kleineren Gesamtdurchmesser ungefähr ein Drittel der Länge des Zwei-Stufen-Wandankers ausmacht.

## Revendications

1. Procédé d'interconnexion de deux unités modulaires de construction (51, 52) ou plus de briques et/ou de béton à l'aide d'un tirant de mur (41) et sans l'utilisation d'un matériau de scellement, dans lequel une première unité modulaire de construction (51) est en un matériau plus mou qu'une seconde unité modulaire de construction (52), le tirant de mur (41) consistant en une tige comportant un coeur central solide (42) avec deux ailettes en spirale (43) ou plus, et de préférence formées en une pointe (44) à au moins une extrémité, le procédé comportant les étapes suivantes : former un premier trou de positionnement à travers la première unité modulaire de construction (51), former un second trou de positionnement du même diamètre que le premier trou de positionnement, et coaxial à celui-ci, dans la seconde unité modulaire de construction (52), les trous de positionnement étant formés de sorte que leur diamètre est inférieur au diamètre global du tirant (41) qui doit venir en prise avec les unités modulaires de construction (51, 52), introduire le tirant (41) dans le trou de positionnement dans la premier unité modulaire de construction (51), et insérer le tirant (41) en l'entraînant séquentiellement dans les deux trous de positionnement par l'ultermédiaire d'un outil d'insertion (11) qui est entraîné par un outil d'insertion, l'outil d'insertion (11) comportant un logement (12) ayant des moyens sous la forme d'un alésage (16) pour recevoir le tirant, dans lequel pour entraîner le tirant de mur (41) dans les trous de positionnement, l'outil de percussion est mis sous tension et des impacts axiaux répétés sont générés, les impacts axiaux répétés entraînant le tirant de mur plus profondément dans les trous de positionnement à mesure que les ailettes en spirale (43) du tirant de mur (41) découpent progressivement dans les matériau des unités modulaires de construction (51, 52), le procédé étant **caractérisé en ce que** l'outil utilisé pour entraîner le tirant de mur dans les unités modulaires de construction comporte en outre des moyens sous la forme d'un tasseau sollicité par ressort (19) qui est agencé pour un déplacement en va-et-vient axial dans le logement (19, 32) pour transmettre des impacts axiaux répétés depuis l'outil de percussion au tirant (41), tout en permettant au tirant (41) de tourner à mesure que les ailettes en spirale (43) découpent dans le matériau des unités modulaires de construction (51, 52), chaque impact déplaçant le tasseau (19) axialement par rapport au logement à l'encontre de sa sollicitation de ressort, ce qui déplace à son tour une extrémité arrière du tirant de mur axialement par rapport au logement lorsque l'impact axial est transmis au tirant de mur, le procédé étant en outre **caractérisé en ce qu'**un tirant de mur à deux étages est utilisé, ayant une partie avant qui est formée avec un diamètre global plus petit que le resta du tirant de mur, la partie avant de diamètre réduit du tirant de mur étant entraînée dans le matériau plus dur de la seconde unité modulaire de construction (52) tandis que la partie arrière de diamètre plus grand du tirant de mur s'agrippe dans le matériau plus mou de la première unité modulaire de construction (51).

2. Procédé selon la revendication 1, dans lequel le tirant de mur (41) est entraîné par le tasseau sollicité par ressort (19) vers une position dans laquelle l'extrémité arrière du tirant de mur est évidée en dessous de la surface de la première unité modulaire de construction (51).

3. Procédé selon l'une des revendications 1 ou 2, dans lequel le tirant de mur est formé avec une pointe au niveau de son extrémité arrière (44) qui est reçue dans une dentelure dans le tasseau sollicité par ressort (19) pendant la transmission des impacts axiaux répétés.

4. Procédé selon l'une des revendications 1, 2 ou 3, dans lequel la sollicitation de ressort du tasseau (19) ramène le tasseau vers sa position axiale initiale entre les impacts.

5. Procédé selon l'une quelconque des revendications précédentes, dans lequel l'outil d'insertion est un outil d'insertion rotatif, et lors d'une mise sous tension, il fait tourner le tasseau (19) par rapport au logement, dans lequel un outil d'insertion est utilisé dans lequel le tasseau (19) est sollicité par une bobine enroulée vers la gauche de fil à ressort positionnée entre des sièges de ressort, de sorte qu'une rotation du tasseau (19) a pour résultat un contact de frottement minimum entre les extrémités du fil à ressort et les sièges de ressort.

6. Procédé selon l'une quelconque des revendications précédentes, dans lequel la seconde unité modulaire de construction (52) est en béton armé ou briques, et le tirant de mur à deux étages est installé à travers un joint de mortier dans la première unité modulaire de construction pour fixer la première unité modulaire de construction sur la seconde unité modulaire de construction.

7. Tirant de mur à deux étages destiné à être utilisé dans le procédé selon l'une quelconque des revendications 1 à 6, comportant un coeur central plein avec deux ailettes en spirale ou plus, et formé en une pointe à chaque extrémité, dans lequel une première partie d'extrémité du tirant de mur qui est destinée à être entraînée dans le matériau plus dur de la seconde unité modulaire de construction (52) a un diamètre global plus petit que le reste du tirant de mur qui doit s'agripper dans le matériau plus mou de la première unité modulaire de construction (51), dans lequel la séparation entre la partie de diamètre plus petit et la partie de diamètre plus grand forme un gradin dans le tirant à deux étages,

8. Tirant de mur selon la revendication 7, dans lequel la partie de diamètre global plus petit représente moins de la moitié de la longueur totale du tirant de mur.

9. Tirant de mur à deux étages selon la revendication 8, dans lequel la partie de diamètre plus petit représente environ un tiers de la longueur du tirant à deux étages,
